# EUROPEAN PATENT APPLICATION

(11) **EP 1 993 253 A1**
(43) Date of publication of application: **19.11.2008**
(21) Application number: 07009642.5
(22) Date of filing: 14.05.2007
(51) Int. Cl.: H04L 29/06

(54) **Method and device for transmitting information via a link aggregation and system comprising such device**

(71) Applicant: Nokia Siemens Networks Oy, 02610 Espoo (FI)
(72) Inventor: The designation of the inventor has not yet been filed
(74) Representative: Bruglachner, Thomas E.

(57) **Abstract**

A method and a device for transmitting an information via a link aggregation are provided, wherein said information is processed by a generator.

## Description

The invention relates to a method and a device for transmitting information via a link aggregation and to a system comprising such device.

Ethernet technology has evolved from a mature technology for Local Area Network (LAN) environments to a new technology in the carrier network environment (service and network access providers). However, the carrier network environment has different requirements compared to the LAN environment and thus needs some additions to common Ethernet.

One aspect of carrier networks is their ability to detect faults. This is one feature of an Operation and Management (OAM) functionality.

Some standards for the Ethernet environment that evolved during the last years support also OAM for Ethernet networks. These are, e.g.:
- IEEE 802.1ag - Connectivity Fault Management
- ITUT Y.1731 - OAM Functions and Mechanisms for Ethernet based Network

The basic idea of fault detection is to define two ports within a network, wherein one of the ports periodically sends packets via a network connection (e.g., a virtual LAN - VLAN) and the other port monitors the arrival of these packets. As soon as such arrival of packets stops (usually if three consecutive packets are missing), a connection fault is detected and can be notified to the network management system (NMS). Such an OAM mechanism may run on many connections simultaneously.

One basic element in an Ethernet network is a Link Aggregation (LAG). LAG is defined in, e.g., document IEEE 802.3ad.

An optional Link Aggregation sublayer for use with CSMA/CD MACs is defined in IEEE 802.3ad. Link Aggregation allows one or more links to be aggregated together to form a Link Aggregation Group, such that a MAC Client can treat the Link Aggregation Group as if it were a single link. To this end, it specifies the establishment of DTE to DTE logical links, consisting of N parallel instances of full duplex point-to-point links operating at the same data rate.

Link Aggregation comprises an optional sublayer between a MAC Client and the MAC (or optional MAC Control sublayer).

It is possible to implement the optional Link Aggregation sublayer for some ports within a system while not implementing it for other ports; i.e., it is not necessary for all ports in a system to be subject to Link Aggregation.

Since Ethernet link bandwidth usually increases by multiplication of 10 (e.g., 10Mbps, 100Mbps, 1Gbps, etc.), LAG defines how to aggregate several (n) Ethernet links, all of the same rate, to a larger link with a bandwidth amounting to
n*{single link rate)
(e.g. 8 links of 100Mbps create a LAG with 800Mbps).

An important aspect of LAG is its protection: If one of the physical links composing a LAG fails, the traffic can still be conveyed by the remaining links of the LAG and hence the traffic through the LAG is kept up.

The object to be solved is to provide an approach to extend the LAG functionality.

This problem is solved according to the features of the independent claims. Further embodiments result from the depending claims.

In order to overcome this problem a method for transmitting an information via a link aggregation is provided, wherein said information is processed by a generator.

In an embodiment, the generator is a packet generator used for generating the information.

In a further embodiment, the information is or comprises OAM information.

In a next embodiment, the information is transmitted via one port of a network element via a link of the link aggregation.

It is to be noted that link aggregation may also refer to a link aggregation group.

This approach advantageously allows that (OAM) information is sent via one link of the link aggregation (LAG) only, thereby avoiding multiple transmissions of the same (OAM) information via several aggregated links.

An embodiment is that the information is processed and/or created in a generator of at least one port of the network element.

Preferably, the network element comprises several generators at several of its ports.

In another embodiment, the information processed by said generator is further processed by a distribution function.

The distribution function may result in distributing traffic as evenly as possible to the at least one port of the network element and thus in particular towards the link aggregation. In a further embodiment, said distribution function can be a hash function or any means that may help distributing traffic (substantially evenly) towards several ports according to an essentially uniform distribution of load across the set of ports.

It is also an embodiment that a result of the distribution function is compared with a port number on which the information was generated. Hence, the information may only be forwarded if the result of the distribution function corresponds to the port number.

In particular, the hash function can be used in order to decide whether an information produced by a generator should be forwarded via a particular port of the network element. As the hash function is the same, the hash result will produce the same port number. This hash result can be compared with the actual port number at which the respective data packet has been generated. If there is a match, the data packet will be forwarded to the port of the network element, otherwise the data packet will be dropped.

In yet another embodiment, the method comprises the following step:
- Due to a change of the link aggregation the distribution function is adjusted.

Hence, any kind of change of the LAG can be mapped easily and fast according to a change of the distribution function thereby sending the information via the updated LAG configuration. If a particular port becomes inactive, this can be considered by an appropriate update of the distribution function, e.g., the hash function. Hence, the uniform distribution of data packets across the ports considers the remaining (i.e., still active) ports only.

It is a further embodiment that the change of the link aggregation is based on at least one of the following failures:
- A change of ports of the link aggregation;
- A link failure of a link of the link aggregation.
- A line card failure of the network element;
- A port failure of the network element;
- A port failure of the line card.

In yet an embodiment, the network element comprises at least one line card , wherein said at least one line card comprises at least one port.

It is also possible that a network element comprises several line cards, each of which comprising a certain number of ports for, e.g., redundancy purposes.

Another embodiment relates to the information that may comprise information and/or data of various kind. In particular, OAM information comprises an OAM packet type (to distinguish between OAM and normal data packets), an OAM entity ID, an OAM end point ID of this OAM entity (two or more end points may participate in the same OAM entity). OAM information may further comprise a rate at which this OAM information is running (e.g., an OAM packet every 10ms, 100ms or 1000ms). Other information can be a time stamp that can be used to measure the jitter/delay between the end points.

OAM information can be any information sent (and/or received) that may be used for, e.g., fault management. One example of OAM information relates to data packets of a predefined form that are sent from to a receiver of a predefined order. In case such packets no longer arrive at a receiver, the receiver knows that there is a problem at sender, at the link or at the receiver. Hence a notification, a warning or an error can be sent to, e.g., an upper layer.

It is also an embodiment that at each of the at least one ports of the network element (and or the line card of the network element) a generator is provided that may process the information.

In a further embodiment, the information is distributed substantially evenly across the at least one port of the network element.

The object stated supra is also solved by a device for transmitting information via a link aggregation comprising a processor unit that is arranged and/or equipped such that the method as described herein is executable on said processor.

Such device may in particular be a communication device and further in particular a network element.

In an embodiment, the device comprises an at least one port.

In another embodiment, the device comprises an at least one line card. Said at least one line card may comprise at least one port (each).

It is further an embodiment that a link aggregation is associated and/or connected with/to the at least one port of the device (directly or via the at least one line card).

The problem stated supra is also solved by a communication system comprising a device as described herein.

Embodiments of the invention are shown and illustrated in the following figures:
- Fig.1: shows an example for link aggregation comprising three physical ports a, b, c, and a port d;
- Fig.2: shows a network diagram comprising network element to visualize as how information can be conveyed via link aggregation;
- Fig.3: shows a network element comprising two line cards with two ports each, wherein a generator generates OAM messages that are sent a particular port of a link aggregation.

The following examples may refer to OAM information. However, any kind of information may be transmitted via the link aggregation and in particular be processed and/or generated by a packet generator.

In order to deliver traffic to a link aggregation (LAG) port, a forwarding plane can select one of the physical links of the LAG as an outgoing port. In order to distribute traffic as evenly as possible over the physical links of the LAG, a hash function can be used to select the physical link for transmission. This is done for each packet to be transmitted or forwarded.

The key to the hash function is obtained from each data packet to be transmitted. The key usually comprises a source address (MAC SA) and a destination address (MAC DA) of the packet. The result of the hash function is one of the LAG's physical ports. As soon as the LAG configuration is changed (port was added/removed) the hash function can be updated to contain the updated ports of the LAG.

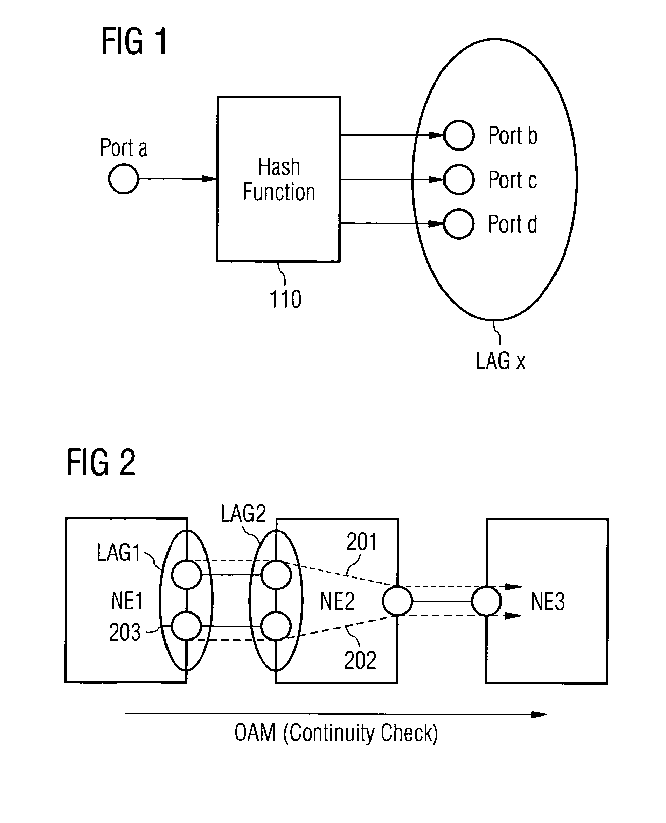

**Fig.1** shows an example for link aggregation comprising three physical ports a, b, c, and a port d. Port a is a normal port, i.e. not a LAG-port. A link aggregation x comprises ports b, c and d.

A Hash Function 110 maps Ethernet packets that arrive from port a and are destined for LAG x according to the following mapping rule:
Input of the Hash Function 110:
   MAC Source Address (SA),
   MAC Destination Address (DA);
Output of the Hash Function 110:
   Port b, c or d.

Hence, according to its inputs, the Hash Function 110 selects one of the physical ports b, c or d as an outgoing port for the respective data packet.

### Generator via link Aggregation:

Link aggregation (LAG) can be associated with an Ethernet port. Thus, a generator for supporting an operation and maintenance (OAM) function can be provided at an Ethernet port and be associated with a LAG.

In such case, it is advantageous that only one link of the LAG conveys the OAM packets; the remaining links - even if generators are provided at their associated ports - shall not carry this OAM information.

In chassis based systems that are common in carrier networks, the physical ports of the LAG can reside on different pieces of "sub-hardware" of a respective network element, e.g., on different line cards.

If the port configuration of a LAG is changed (e.g., due to a port failure), this would lead to a reconfiguration of a generator that is located on another physical port.

Since the generator producing OAM information may be created for every connection in the network (e.g., a virtual LAN (VLAN) connection), there can be many generators created on the same port, which are all working in parallel at the same time. Failure of one of the LAG's physical ports may require a reconfiguration of many generators to cover different physical ports of that LAG.

Doing the reconfiguration by software can be slow and is hardly scalable as the number of generators to be reconfigured may increase due to particular requirements. Hence, such reconfiguration by software may last about seconds.

In order to fast detect network failures using OAM information, the generator can generate an OAM packet each 10msec for each service instance (e.g., each VLAN). Hence, if the OAM generation is stopped for more than 30 msec, the remote side monitoring these OAM information will notify a failure.

One particular advantage of the approach presented herewith is the fast response and reconfiguration of generators. It is shown as how to reconfigure generators that are configured over LAG ports in a fast way. Preferably, the already existing configuration of the hash function (which is easy to maintain and fast in processing) is used in order to recover the generator traffic over the LAG. The suggested solution is scalable and its performance is independent of the number of generators that are configured on the LAG port.

This approach allows the network operator to run OAM information at fast rates and to quickly detect network failures (in the order of 50 msec). This can be used also to trigger protection mechanisms within the network upon failure detection.

**Fig.2** shows a network diagram comprising network element to visualize as how OAM information can be conveyed via link aggregation.

A first network element NE1 comprises a first link aggregation LAG1 with two ports that are connected to a second link aggregation LAG2 with two ports of a second network element NE2. The second network element NE2 further comprises a single port (no LAG) that is connected to a single port of a third network element NE3. As an example according to Fig.2, an OAM information for checking a continuity of an existing connection is sent from the first network element NE1 towards the third network element NE3. For this purpose, OAM information ("continuity check packets") is generated at the first link aggregation LAG1 and such OAM information is terminated at the third network element NE3.

A dashed line 202 shows a path across which OAM information is conveyed in case both ports at the first link aggregation LAG1 are operative.

In case one port of the first link aggregation LAG1 fails (as an example, the lower port 203), a dashed line 201 visualizes OAM information traffic via the operative port of the first link aggregation LAG1.

When a packet generator is configured at a port of a link aggregation, such port may preferably generate packets at a constant rate that is configured for the generator. Usually, the packet rate is not affected by the number of ports that are associated with a particular link aggregation.

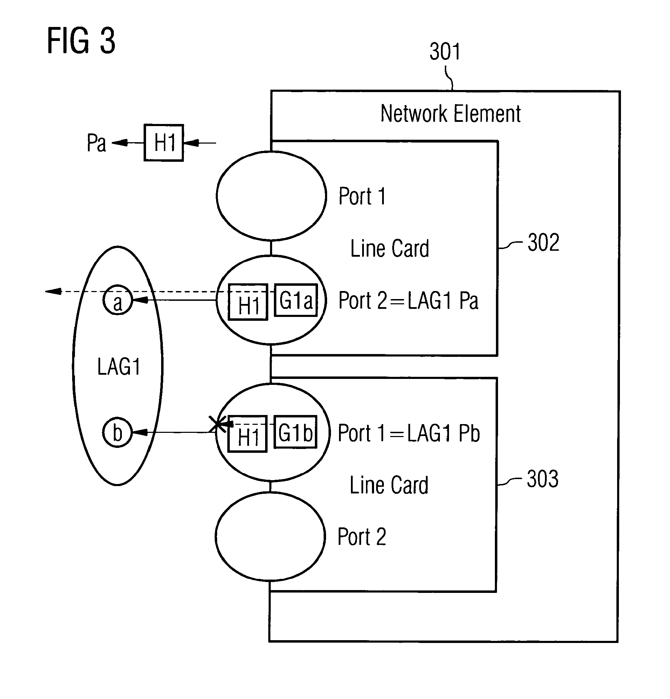

**Fig.3** shows a network element 301 comprising two line cards 302 and 303. Each line card 302 and 303 has two ports "Port1" and "Port2". A link aggregation LAG1 is associated with Port2 of line card 302 and with Port 1 of line card 303 thereby defining ports a and b of the link aggregation LAG1.

Port2 of line card 302 comprises a generator G1a for port a of the link aggregation LAG1 and Port 1 of the line card 303 comprises a generator G1b for port b of the link aggregation LAG1.

When a generator G1 is created on a port of the link aggregation LAG1, instances G1a and G1b of this generator are created for each port a and b of this link aggregation LAG1. Preferably, all instances of the generator G1 are identical for each port, i.e., the generators G1a and G1b generate the same data packets at the same rate.

Before the generated packets are sent to the physical outgoing port, they are processed by a hash function H1 of the link aggregation LAG1. Such hash function is arranged after each generator G1a and G1b in Port2 of the line card 302 and Port1 of the line card 303.

Since the generated packets are the same and the hash function is the same, the result of the hash function provides the same port number (in the example according to Fig.3 this result is port a of the link aggregation LAG1).

Further, this result of the hash function is compared with the port number on which the packet was generated:
- If there is a match, the packet will be forwarded to the port;
- If there is no match, the packet will be dropped.

This ensures that only one of the generator instances G1a or G1b will successfully forward its data packets containing in particular OAM information to a port of the link aggregation LAG1 (here: G1a will forward information to port a of LAG1) while packets of the other generator (here G1b) are discarded.

Hence, from a link aggregation perspective only one generator exists and/or is active.

If there is a link failure and/or a port failure with regard to, e.g., port a of the link aggregation LAG1, the hash function can be updated to map only working ports to the link aggregation LAG1. With regard to the example shown in Fig.3, due to a failure with regard to port a of the link aggregation LAG1, the generator G1b may become active and OAM information can be sent via port b of the link aggregation LAG1.

Advantageously, all generators that are created to transmit data over a link aggregation (LAG1 according to Fig.3) may use the same hash function H1 to substantially uniformly distribute said data over the existing (active) links of the link aggregation. Hence, an update of such distribution function (e.g., hash function) that acts as a mapping rule suffices to fast and efficiently forward OAM information via one link of a link aggregation only.

Further advantages of the approach provided herewith are in particular:
a) A reconfiguration according to an actual change of ports and/or links can be executed in short time so that connection tests can pass even when ports and/or links of a link aggregation fail. This allows OAM information to be conveyed at fast rates without producing false alarms due to slow recovery time. In practice, OAM information can be conveyed at rather high data rates, e.g., 10s of milliseconds. Such rates can be used for protection in addition to a monitoring mechanism running at significantly lower data rates (in the range of seconds).
b) This approach uses existing elements and may extend, e.g., existing hash tables and/or packet generators.
   Thus, the approach is inexpensive and easy to maintain.
c) The approach follows a structured network solution, and therefore is easy to test and to maintain.
d) The bandwidth provided by link aggregation ports can preferably be used for conveying OAM information.

## Claims

1. A method for transmitting information via a link aggregation, wherein said information is processed by a generator.

2. The method according to claim 1, wherein the information comprises an OAM information.

3. The method according to any of the preceding claims, wherein the generator is a packet generator.

4. The method according to any of the preceding claims, wherein the information is transmitted via one port of a network element via a link of the link aggregation.

5. The method according to any of the preceding claims, wherein the information processed by the generator is further processed by a distribution function.

6. The method according to claim 5, wherein a result of the distribution function is compared with a port number on which the information was generated.

7. The method according to claim 6, wherein the information is forwarded if the result of the distribution function corresponds to the port number and it is not forwarded otherwise.

8. The method according to any of claims 5 to 7 comprising the following step:
- Due to a change of the link aggregation the distribution function is adjusted.

9. The method according to claim 8, wherein the change of the link aggregation is based on at least one of the following changes and/or failures:
- A change of ports of the link aggregation;
- A link failure of a link of the link aggregation.
- A line card failure of the network element;
- A port failure of the network element;
- A port failure of the line card.

10. The method according to any of claims 5 to 9, wherein the distribution function is a hash function.

11. The method according to any of the preceding claims, wherein the network element comprises at least one line card, wherein the at least one line card comprises at least one port.

12. The method according to claim 11, wherein at each of the at least one ports a generator processes the OAM information.

13. A device for transmitting information via a link aggregation comprising a processor unit that is equipped such that the method according of any of the preceding claims is executable on said processor.

14. The device according to claim 13, wherein said device is a communication device, in particular a network element.

15. The device according to any of claims 13 or 14 comprising an at least one port.

16. The device according to any of claims 14 or 15 comprising an at least one line card.

17. The device according to claim 16, wherein the at least one line card comprises at least one port.

18. The device according to any of claims 15 or 17, wherein a link aggregation is associated and/or connected with/to the at least one port of the device.

19. Communication system comprising the device according to any of claims 13 to 18.
